# FASCICULE DE BREVET EUROPEEN

(11) **EP 0 505 275 B1**
(45) Date de publication et mention de la délivrance du brevet: **28.09.1994**
(21) Numéro de dépôt: 92400730.5
(22) Date de dépôt: 19.03.1992
(51) Int. Cl.: D01D 5/08, C03B 37/02, D02G 3/18, B29C 67/14

(54) **Procédé et dispositif de fabrication d'un fil composite**
Verfahren und Vorrichtung zur Herstellung eines Verbundgarnes
Method and apparatus for producing a composite yarn

(30) Priorité: 19.03.1991 FR 9103274
(43) Date de publication de la demande: 23.09.1992
(73) Titulaire: VETROTEX FRANCE S.A., F-73000 Chambéry (FR)
(72) Inventeur: Roncato, Giordano, F-73100 Aix les Bains (FR); Fedorowsky, Robert, F-73100 Aix les Bains (FR); Boissonnat, Philippe, F-73230 Barby (FR); Loubinoux, Dominique, F-73000 Chambéry (FR)
(74) Mandataire: Breton, Jean-Claude

(56) Documents cités:
- EP-A- 0 367 661
- WO-A-85/03728
- FR-A- 2 611 748
- US-A- 3 299 469

## Description

La présente invention concerne un procédé et un dispositif de fabrication d'un fil composite forme par l'association d'une multiplicité de filaments continus de verre et de filaments continus de matière organique thermoplastique.

Plus précisément l'invention concerne un procédé, et son dispositif de mise en oeuvre, selon lequel on étire des filaments continus de verre et de matière organique thermoplastique à partir de ces deux matières à l'état fondu et on rassemble ces différents filaments pour former un fil composite.

Il est déjà connu, notamment par la demande de brevet EP-A-0 367 661, de fabriquer un fil composite selon ce principe. Ce document décrit des installations comprenant une filière, à partir de laquelle sont étirés des filaments continus de verre, et une tête de filage, alimentée sous pression par une matière organique thermoplastique, délivrant des filaments continus organiques. Ces différents filaments, sous forme de nappes, ou de nappes et de fil, sont assemblés de différentes manières pour former un fil composite.

Ce document préconise un mode de réalisation avantageux qui consiste à entourer les filaments (ou le fil) de verre par les filaments organiques au moment de leur réunion. Le fil composite ainsi réalisé présente l'avantage d'éviter, ou tout au moins de limiter, le frottement des filaments de verre sur les surfaces solides avec lesquelles il vient en contact.

D'après ce document, ce mode de réalisation nécessite la mise en oeuvre d'une tête de filage annulaire pourvue d'une ouverture centrale à travers laquelle passent les filaments ou le fil de verre. Il ressort de la description de ce document que ce type de fil composite ne peut être obtenu que grâce à une installation particulière.

La présente invention a donc pour objet un procédé de fabrication d'un fil composite, formé d'un ou plusieurs fils de verre environnés de filaments organiques, qui est indépendant de la configuration de la tête de filage utilisée pour obtenir les filaments organiques.

La présente invention a notamment pour objet un procédé permettant de fabriquer un tel fil composite, en mettant en oeuvre des têtes de filage habituellement utilisées dans le domaine de l'industrie des fibres synthétiques.

Ces buts sont atteints grâce à un procédé selon lequel on étire des filaments continus de verre et de matière organique thermoplastique à partir de ces deux matières à l'état fondu, les filaments organiques étant obtenus par étirage de matière extrudée à travers les orifices de la plaque-filière d'une ou plusieurs têtes de filage, puis on rassemble ces différents filaments pour former un fil composite et qui consiste à étirer une ou plusieurs nappes de filaments organiques qui convergent vers un même point et délimitent une partie ou la totalité de la périphérie d'une zone comprise entre le plan passant par la plaque-filière et le point de convergence et, les filaments de verre étant réunis en au moins un fil, à introduire latéralement le fil de verre dans ladite zone par un passage séparant deux nappes ou par un passage ouvert au sein d'une nappe, ledit fil étant ensuite associé aux filaments organiques au point de convergence.

Le trajet des filaments organiques peut être dévié par un dispositif de guidage placé entre la plaque-filière de la tête ou des têtes de filage et le point de convergence. La forme de la zone délimitée par les filaments organiques dépendra de la forme de la plaque-filière et/ou du nombre de têtes de filage associées ainsi que de la forme du dispositif de guidage.

Dans l'un des modes de réalisation les plus simples, qui ne comporte pas de dispositif de guidage, les filaments sont étirés en une ou plusieurs nappes qui délimitent une partie ou la totalité de la périphérie d'une zone de forme conique ou pyramidale.

Ainsi les filaments organiques peuvent être étirés à partir de plusieurs séries d'orifices alignés et former plusieurs nappes qui délimitent une zone de forme pyramidale. Cette zone peut être ouverte sur l'une de ses faces par laquelle le fil de verre sera introduit. Ces nappes peuvent être issues, par exemple, de plusieurs plaques-filière de forme rectangulaire.

Les filaments organiques peuvent être également étirés à partir d'une multiplicité d'orifices répartis sur une série d'anneaux concentriques ou sur une ou plusieurs portions d'anneaux concentriques appartenant à une ou plusieurs têtes de filage. Les filaments organiques sont alors étirés en une ou plusieurs nappes qui délimitent une zone de forme conique.

Cette zone peut comprendre un secteur ouvert entre deux nappes issues de deux portions de plaques-filière annulaires, ou dans une nappe issue d'une plaque-filière annulaire dénuée d'orifices sur une partie de sa surface. Le fil de verre sera introduit par ce secteur dans la zone conique.

Lorsque la périphérie de la zone est complètement délimitée par les filaments organiques, par exemple lorsque la tête de filage comprend une plaque-filière annulaire perforée d'orifices sur toute sa surface, le trajet de plusieurs desdits filaments est dévié de manière à permettre le passage du fil de verre à travers la nappe de filaments organiques.

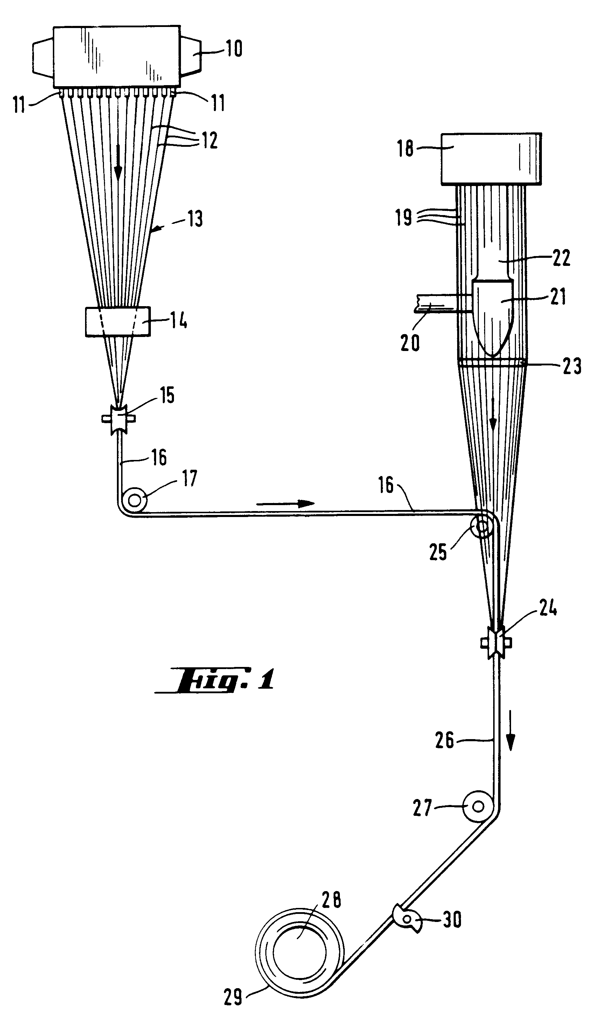

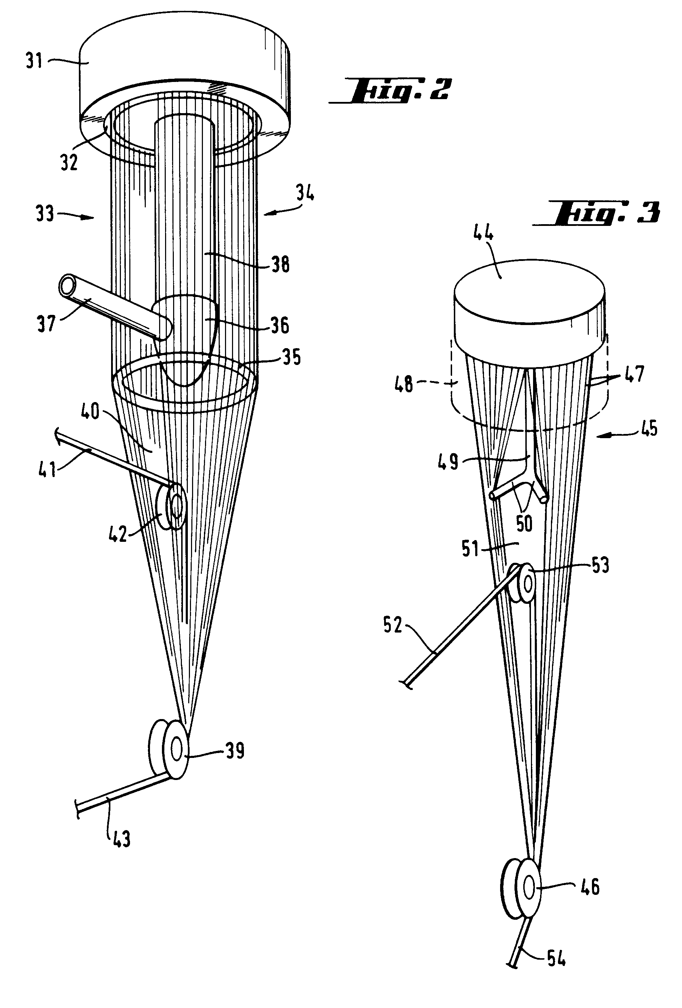

La présente invention sera mieux appréciée grâce à la description détaillée ci-après, illustrée par les figures suivantes :
. **la figure 1** est une vue schématique de l'ensemble d'une installation qui permet de mettre en oeuvre l'invention,
. **la figure 2** est une vue schématique qui représente une partie de l'installation illustrée à la figure 1,
. **la figure 3** est une vue schématique partielle qui illustre un autre mode de réalisation de l'invention.

L'invention illustrée par la figure 1 comprend une filière schématique 10, qui est normalement reliée à une source d'alimentation en verre. Cette source, non représentée sur la figure, peut être l'avant-corps d'un four qui distribue le verre fondu à plusieurs filières, semblable à la filière 10, alimentées par simple gravité. La filière 10 peut être alimentée à partir de verre froid, obtenu et stocké sous forme de billes dans une trémie disposée au-dessus de la filière.

La filière 10 est généralement en alliage platine-rhodium et chauffée par effet Joule. Cette filière permet de refondre le verre ou de le maintenir à une température suffisante pour atteindre une viscosité convenant à son étirage sous forme de filaments continus. Le verre fondu s'écoule d'une multiplicité d'orifices, tels que les tétons 11, et immédiatement étiré en une multiplicité de filaments 12, rassemblés ici en une seule nappe 13.

Cette nappe 13 vient en contact avec le dispositif schématisé en 14, de manière que chaque filament 12 soit revêtu d'un apprêt ou d'un ensimage. Ce dispositif 14 est le plus souvent constitué d'un bac alimenté en permanence par un bain d'apprêt ou d'un ensimage dans lequel est immergé la partie inférieure d'un rouleau en rotation. Ce rouleau se recouvre en permanence d'une pellicule d'apprêt ou d'un ensimage prélevé au passage par les filaments 12 qui glissent à sa surface.

La nappe 12 converge vers le dispositif d'assemblage 15 ou les différents filaments sont réunis pour donner naissance au fil 16. Ce dispositif peut être constitué par une simple poulie à gorge ou d'une plaque munie d'une encoche. Le fil 16, après passage sur un organe de guidage 17 tel par exemple qu'une poulie à gorge ou une tige, est entraîné vers l'autre partie de l'installation.

Cette partie comprend une tête de filage 18 couramment employée pour produire des filaments synthétiques par extrusion d'une matière organique thermoplastique.

La tête 18, de forme cylindrique, est munie à sa base d'une plaque-filière annulaire perforée d'une multiplicité d'orifices. Cette tête de filage est reliée à une extrudeuse, non représentée, qui l'alimente sous pression en polymère thermoplastique à l'état fondu. La matière extrudée à travers les orifices de la tête 18 est immédiatement étirée en une multiplicité de filaments 19.

Les filaments 19 sont refroidis dès leur formation grâce à un dispositif de soufflage qui est également connu. Il comprend une source d'alimentation en fluide gazeux telle qu'une soufflante, non représentée, reliée par un conduit 20 à la base 21 du dispositif de refroidissement situé dans l'axe vertical de la tête 18. La base 21 du dispositif reçoit le fluide gazeux et le canalise vers la partie supérieure 22 du dispositif. Celle-ci, de forme cylindrique, est délimitée extérieurement par une paroi dont la structure assure une diffusion radiale, régulière, du fluide gazeux en direction des filaments 19. Cette paroi est avantageusement constituée d'une ou plusieurs couches de tissu métallique ou d'un matériau poreux. Un tel dispositif de refroidissement, associé à une tête de filage, est décrit, par exemple, dans les brevets US-A-3 135 811, US-A-3 259 681 ou US-A-3 969 462. Dans le mode de réalisation représentée figure 1, les filaments 19 sont stabilisés par un dispositif de guidage 23, avant d'être rassemblés par un dispositif d'assemblage 24 similaire au dispositif 15.

Le fil de verre 16 est guidé au milieu des filaments organiques 19 grâce à un organe 25, similaire à l'organe de guidage 17. Le fil 16 vient en contact avec les filaments 19 au niveau du dispositif d'assemblage 24. En aval du dispositif 24 prend naissance le fil composite 26 formé du fil de verre entouré de filaments organiques. Après passage sur un organe de guidage, tel que la roulette 27, le fil 26 est bobiné sur une broche 28 mue en rotation par un moteur fixé sur un bâti, l'un et l'autre non représentés. Le fil 26 est bobiné ici sous forme d'un enroulement 29 grâce à un organe de répartition 30 qui guide ledit fil par un mouvement de va et vient à la surface de la broche.

Dans le mode de réalisation illustré, la broche 28 est l'organe qui sert de moyen d'étirage des filaments et des filaments organiques.

La figure 2 représente de manière plus précise la tête de filage et les moyens mis en oeuvre pour associer les filaments organiques et le fil de verre, illustrés schématiquement à la figure 1.

La tête de filage 31, de forme cylindrique, est munie à sa base d'une plaque-filière 32 de forme annulaire. Cette plaque comprend deux séries d'orifices répartis sur deux portions de la zone annulaire. Dans chacune de ces portions les orifices sont disposés sur des arcs de cercles concentriques.

La matière extrudée par ces orifices est immédiatement étirée sous la forme de deux nappes distinctes de filaments 33, 34, stabilisées par l'anneau de guidage 35. Ces nappes sont refroidies par le dispositif de soufflage implanté au-dessous de la tête 31 dans son axe vertical. Ce dispositif est alimenté en air à sa base 36 par l'intermédiaire du conduit 37 avant d'être diffusé radialement à travers la paroi extérieure de la colonne cylindrique 38. Les nappes 33, 34 sont ensuite rassemblées en un seul fil par la roulette 39.

Les nappes 33 et 34 délimitent une partie de la périphérie d'une zone comprise entre la base de la tête 31 et la roulette 39. Dans le mode de réalisation illustré par la figure 2, cette zone est cylindrique entre la tête 31 et l'anneau 35, puis conique entre ledit anneau et la roulette 39. Cette zone est ouverte sur toute sa hauteur en deux endroits différents, notamment au niveau du secteur 40 ouvert dans la partie conique de ladite zone.

Le fil de verre 41, entraîné selon une direction approximativement perpendiculaire à l'axe vertical de la tête de filage 31, passe sur la poulie 42 puis sur la roulette 39 où il entre en contact avec les filaments des nappes 33 et 34.

La poulie 42 est disposée plus ou moins profondément à l'intérieur de la zone conique. Ainsi, le trajet suivi par le fil de verre entre la poulie 42 et la roulette 39 peut-il aller du trajet qui coïncide avec l'axe vertical de la tête de filage 31 au trajet situé à la périphérie de la zone délimitée par les filaments organiques en cours d'étirage. Le fil de verre 41 peut ainsi être immédiatement environné de filaments organiques dès son association avec eux au niveau de la roulette 39. Le fil composite 43 peut être ensuite bobiné à l'aide d'une broche comme décrit précédemment.

Il est évidemment possible de réaliser l'introduction dans la zone conique d'un deuxième fil de verre, issu d'une seconde filière, en le guidant par une autre poulie disposée, par exemple, au-dessus de la poulie 42. L'introduction de ce fil de verre peut être réalisée soit par le même secteur 40, soit par le secteur qui lui est opposé.

Une variante de ce mode de réalisation consiste à utiliser une tête de filage munie d'une plaque-filière annulaire perforée sur toute sa surface à l'exception d'un secteur de ladite plaque. La nappe de filaments organiques est ouverte en un seul endroit, à l'aplomb dudit secteur.

La figure 3 montre une tête de filage à laquelle sont associés d'autres moyens que ceux décrits précédemment et qui permettent également de mettre en oeuvre l'invention.

Comme à la figure 2, l'installation représentée comprend une tête de filage 44, de forme cylindrique, équipée à sa base d'une plaque-filière de forme annulaire perforée d'une multiplicité d'orifices sur la totalité de sa surface.

La matière organique extrudée par ces orifices est immédiatement étirée sous la forme d'une nappe 45 qui converge vers une roulette 46 où l'ensemble des filaments 47 sont rassemblés.

Un dispositif de refroidissement, symbolisé par le cylindre 48 figuré en pointillé, est implanté à la base de la tête de filage 44. Ce dispositif est formé pour l'essentiel d'une chambre cylindrique, alimentée par un fluide gazeux refroidi tel que de l'air. La paroi interne de ladite chambre présente, au niveau de la zone de formation des filaments 47, une multiplicité d'orifices d'où l'air diffuse radialement. Cette paroi est avantageusement constituée d'une ou plusieurs couches de tissu métallique ou d'un matériau poreux.

Un dispositif de refroidissement de ce type est décrit notamment par le brevet US-A-3.299.469.

D'autres dispositifs qui permettent de souffler de l'air de l'extérieur vers la zone de formation des filaments organiques sont évidemment utilisables.

Dans le mode de réalisation illustré par la figure 3, la nappe 45 délimite la totalité de la périphérie d'une zone conique comprise entre la plaque-filière de la tête 44 et la roulette 46.

Une barre 49, fixée par l'une de ses extrémités à la base de la tête de filage 44 dans son axe vertical, est munie à son extrémité libre de deux tiges 50 dirigées vers la nappe 45. Ces tiges permettent de dévier le trajet parcouru par un certain nombre de filaments 47. Ceci permet d'ouvrir une fenêtre 51 au sein de la nappe 45. Le fil de verre 52, entraîné selon une direction approximativement perpendiculaire à l'axe vertical de la tête de filage 44, est introduit par la fenêtre 51 dans la zone conique délimitée extérieurement par la nappe 45, en passant sur une poulie 53.

Comme dans le mode de réalisation illustré à la figure 2, le fil 54 entre en contact avec les filaments 47 au niveau de la roulette 46, en aval de laquelle prend naissance le fil composite 54. Comme dans l'exemple précédent, le fil de verre 52 peut suivre un trajet qui peut aller de la périphérie de la zone délimitée par les filaments organiques 47 à l'axe vertical de la tête 44, selon la position fixée à la poulie 53.

## Revendications

1. Procédé de fabrication d'un fil composite, selon lequel on étire des filaments continus de verre et des filaments continus d'une matière organique thermoplastique à partir de ces deux matières à l'état fondu, puis on rassemble ces différents filaments pour former ledit fil composite, **caractérisé en ce que** les filaments organiques sont étirés en une ou plusieurs nappes qui convergent vers un même point et délimitent une partie ou la totalité de la périphérie d'une zone comprise entre le plan passant par la plaque-filière et le point de convergence **et en ce que** les filaments de verre étant réunis en au moins un fil, ce dernier est introduit latéralement dans ladite zone par un passage séparant deux nappes ou ouvert au sein d'une nappe, ledit fil étant ensuite associé aux filaments organiques à leur point de convergence.

2. Procédé selon la revendication 1, **caractérisé en ce que** les filaments organiques sont étirés en une ou plusieurs nappes qui délimitent une partie ou la totalité de la périphérie d'une zone de forme conique ou pyramidale.

3. Procédé selon la revendication 2, **caractérisé en ce que** les filaments organiques sont étirés en plusieurs nappes, formées de filaments issus d'orifices alimentés, et délimitent une zone de forme pyramidale ouverture sur au moins une de ses faces, **et en ce que** le fil de verre est introduit dans ladite zone par sa face ouverte.

4. Procédé selon la revendication 2, **caractérisé en ce que** les filaments sont étirés en une ou plusieurs nappes qui délimitent une zone de forme conique ouverte sur au moins un secteur, **et en ce que** le fil de verre est introduit dans ladite zone par ledit secteur.

5. Procédé selon la revendication 2, **caractérisé en ce qu'**on dévie le trajet de plusieurs filaments organiques de manière à ouvrir un passage au sein d'une nappe desdits filaments, **et en ce qu'**on introduit le fil de verre, par ledit passage dans la zone délimitée, par les filaments organiques.

6. Dispositif de mise en oeuvre du procédé de fabrication d'un fil composite, constitué de filaments continus de verre et de matière organique thermoplastique, défini par l'une des revendications 1-5, qui comprend d'une part au moins une filière (10) alimentée en verre par simple gravité, chauffée par effet Joule, dont la face inférieure est munie d'une multiplicité d'orifices (11), au moins un dispositif d'enduction (14) des filaments de verre (12) et au moins un dispositif d'assemblage (15) desdits filaments en au moins un fil (16, 41, 52) ; d'autre part, au moins une tête de filage (18, 31, 44) alimentée en matière organique thermoplastique fondue sous pression, associée à un dispositif de soufflage (22, 38, 48), le dispositif de mise en oeuvre du procédé comprenant également un organe de guidage (25, 42, 53) du ou des fils de verre (16, 41, 52) au sein des filaments organiques (19, 47), un dispositif d'assemblage commun (24, 39, 46) aux filaments organiques et au(x) fil(s) de verre, ainsi qu'un dispositif commun d'entraînement (28) des filaments organiques et du ou des fils de verre.

7. Dispositif selon la revendication 6, **caractérisé en ce qu'**il comprend une tête de filage cylindrique (18, 31, 44) munie à sa base d'une plaque-filière annulaire (32) perforée d'une multiplicité d'orifices sur une partie de sa surface, lesdits orifices étant répartis en un ou plusieurs groupes, un dispositif de soufflage (22, 38) implanté au-dessous de la tête de filage (18, 31, 44) dans son axe vertical, l'organe de guidage (25, 42) du ou desdits fils de verre étant une poulie disposée à l'aplomb du secteur dénué d'orifices de la tête de filage.

8. Dispositif selon la revendication 6, **caractérisé en ce qu'**il comprend une tête de filage cylindrique (44) munie à sa base d'une plaque filière annulaire perforée d'une multiplicité d'orifices sur la totalité de sa surface, un dispositif de soufflage cylindrique (48) implanté verticalement à la périphérie de la tête de filage et de la zone de formation des filaments organiques, un dispositif de déviation (49, 50) des filaments organiques (47), l'organe de guidage (53) du ou des fils de verre (52) étant une poulie disposée à l'aplomb du dispositif de déviation.

## Claims

1. Process for producing a composite thread, in accordance with which continuous glass filaments and continuous filaments of a thermoplastic organic material are drawn from these two materials in the molten state, and these various filaments are then combined to form said composite thread, characterised in that the organic filaments are drawn into one or more sheets which converge at a given point and delimit partially or totally the periphery of an area between the plane passing through the die plate and the point of convergence; and in that, as the glass filaments are combined to form at least one thread, the latter is introduced laterally into said area via a passage which separates two sheets or is open inside a sheet, said thread then being combined with the organic filaments at their point of convergence.

2. Process according to Claim 1, characterised in that the organic filaments are drawn into one or more sheets which delimit partially or totally the periphery of a conical or pyramidal area.

3. Process according to Claim 2, characterised in that the organic filaments are drawn into a plurality of sheets, formed of filaments coming from fed apertures, and delimit a pyramidal area open on at least one of its faces; and in that the glass thread is introduced into said area via its open face.

4. Process according to Claim 2, characterised in that the filaments are drawn into one or more sheets which delimit a conical area open on at least one sector; and in that the glass thread is introduced into said area via said sector.

5. Process according to Claim 2, characterised in that the path of a plurality of organic filaments is deflected so as to release a passage within a sheet of said filaments; and in that the glass thread is introduced via said passage into the area delimited by the organic filaments.

6. Device for performing the process for producing a composite thread, consisting of continuous glass and thermoplastic organic material filaments, defined by any one of Claims 1 to 5, which firstly comprises at least one die (10) supplied with glass by simple gravity and heated by the Joule effect, and of which the lower face is provided with a large number of apertures (11), at least one device (14) for coating the glass filaments (12) and at least one device (15) for assembling said filaments to form at least one thread (16, 41, 52); secondly, at least one extrusion head (18, 31, 44) supplied with pressurized molten thermoplastic organic material, associated with a blower device (22, 38, 48), the device for performing the process likewise comprising a member (25, 42, 53) for guiding the glass thread or threads (16, 41, 52) inside the organic filaments (19, 47), an assembly device (24, 39, 46) common to the organic filaments and the glass thread (s) as well as a common device (28) for entraining the organic filaments and the glass thread or threads.

7. Device according to Claim 6, characterised in that it comprises a cylindrical extrusion head (18, 31, 44) provided at its base with an annular die plate (32) perforated by a large number of apertures over part of its surface, said apertures being distributed in one or more groups, a blower device (22, 38) located below the extrusion head (18, 31, 44) in its vertical axis, the guide member (25, 42) for the glass thread or threads being a pulley disposed immediately below the extrusion head sector not provided with apertures.

8. Device according to Claim 6, characterised in that it comprises a cylindrical extrusion head (44) provided at its base with an annular die plate perforated by a large number of apertures over its entire surface, a cylindrical blower device (48) located vertically at the periphery of the extrusion head and the organic filament formation area, a device (49, 50) for deflecting the organic filaments (47), the member (53) for guiding the glass thread or threads (52) being a pulley disposed immediately below the deflection device.

## Patentansprüche

1. Verfahren zur Herstellung eines Verbundfadens, gemäß welchem endlose Filamente aus Glas und solche aus einem thermoplastischen organischen Stoff ausgehend von diesen beiden Stoffen im geschmolzenen Zustand gezogen und anschließend diese verschiedenen Filamente zur Bildung des Verbundfadens vereinigt werden, **dadurch gekennzeichnet**, **daß** die organischen Filamente in einer oder mehreren Bahnen gezogen werden, die gegen ein und denselben Punkt konvergieren und einen Teil oder das Ganze des Umfangs eines Bereichs begrenzen, der sich von der Ebene, die von einer Ziehdüsenplatte durchlaufen wird, bis zum Konvergenzpunkt erstreckt, **und daß** die Glasfilamente zu wenigstens einem Faden vereinigt werden, welcher seitlich in diesen Bereich durch einen Durchlaß eingeführt wird, der zwei Bahnen trennt oder sich inmitten einer Bahn öffnet, und danach dieser Faden mit den organischen Filamenten an ihrem Konvergenzpunkt verbunden wird.

2. Verfahren nach Anspruch 1, **dadurch gekennzeichnet, daß** die organischen Filamente in einer oder mehreren Bahnen gezogen werden, die einen Teil oder das Ganze des Umfangs eines kegel- oder pyramidenförmigen Bereichs begrenzen.

3. Verfahren nach Anspruch 2, **dadurch gekennzeichnet, daß** die organischen Filamente in mehreren Bahnen gezogen werden, welche aus aus versorgten Öffnungen austretenden Filamenten bestehen und einen wenigstens auf einer Seite offenen pyramidenförmigen Bereich begrenzen, **und daß** der Glasfaden in diesen Bereich durch dessen offene Seite eingeführt wird.

4. Verfahren nach Anspruch 2, **dadurch gekennzeichnet, daß** die Filamente in einer oder mehreren Bahnen gezogen werden, welche einen wenigstens in einem Anschnitt offenen kegelförmigen Bereich begrenzen, **und daß** der Glasfaden in diesen Bereich durch diesen Abschnitt eingeführt wird.

5. Verfahren nach Anspruch 2, **dadurch gekennzeichnet, daß** man den Weg mehrerer organischer Filamente derart ablenkt, daß sich inmitten einer Bahn aus diesen Filamenten ein Durchlaß öffnet, **und daß** der Glasfaden durch diesen Durchlaß in den von den organischen Filamenten begrenzten Bereich eingeführt wird.

6. Vorrichtung zur Durchführung des durch einen der Ansprüche 1 bis 5 definierten Verfahrens für die Herstellung eines Verbundfadens, der aus endlosen Filamenten aus Glas und aus thermoplastischem organischem Material besteht, welche einerseits wenigstens eine Spinndüse (10), die durch einfache Schwerkraftwirkung mit Glas versorgt und durch Joulesche Wärme erwärmt wird und deren Unterseite mit einer Vielzahl von Öffnungen (11) ausgerüstet ist, wenigstens eine Beschichtungseinrichtung (14) für Glasfilamente (12) und wenigstens eine Einrichtung (15) zum Verbinden dieser Filamente zu wenigstens einem Faden (16, 41, 52) und andererseits wenigstens einen Spinnkopf (18, 31, 44) umfaßt, der mit unter Druck stehendem geschmolzenem thermoplastischem organischem Material versorgt und mit einer Blaseinrichtung (22, 38, 48) verbunden ist, wobei die Vorrichtung zur Durchführung des Verfahrens auch ein Führungselement (25, 42, 53) für den Glasfaden oder die Glasfäden (16, 41, 52) inmitten der organischen Filamente (19, 47), eine Einrichtung (24, 39, 46) für das Verbinden der organischen Filamente und des Glasfadens oder der Glasfäden miteinander und eine gemeinsame Antriebseinrichtung (28) der organischen Filamente und des Glasfadens oder der Glasfäden umfaßt.

7. Vorrichtung nach Anspruch 6, **dadurch gekennzeichnet, daß** sie einen zylindrischen Spinnkopf (18, 31, 44), ausgerüstet an seiner Grundfäche mit einer ringförmigen Ziehdüsenplatte (32), die in einem Teil ihrer Oberfläche mit einer Vielzahl von Öffnungen durchbohrt ist, die in einer oder mehreren Gruppen angeordnet sind, eine unterhalb des Spinnkopfs (18, 31, 44) in dessen senkrechter Achse angebrachte Blaseinrichtung (22, 38) und das Führungselement (25, 42) des Glasfadens oder der Glasfäden, das eine lotrecht zu dem keine Öffnungen enthaltenden Abschnitt des Spinnkopfs angeordnete Scheibe ist, umfaßt.

8. Vorrichtung nach Anspruch 6, **dadurch gekennzeichnet, daß** sie einen zylindrischen Spinnkopf (44), ausgerüstet an seiner Grundfäche mit einer ringförmigen Ziehdüsenplatte, die auf ihrer gesamten Oberfläche mit einer Vielzahl von Öffnungen durchbohrt ist, eine zylindrische Blaseinrichtung (48), die senkrecht am Umfang des Spinnkopfs und des Bildungsbereichs der organischen Filamente angebracht ist, eine Einrichtung (49, 50) zum Ablenken der organischen Filamente (47) und das Führungselement (53) des Glasfadens oder der Glasfäden (52), das eine lotrecht zur Ablenkeinrichtung angeordnete Scheibe ist, umfaßt.
